# EUROPÄISCHE PATENTSCHRIFT

(11) **EP 0 477 164 B1**
(45) Veröffentlichungstag und Bekanntmachung des Hinweises auf die Patenterteilung: **04.08.1993**
(21) Anmeldenummer: 91890207.3
(22) Anmeldetag: 13.09.1991
(51) Int. Cl.: B01J 4/02, B01J 2/20, A23G 3/02

(54) **Vorrichtung zur portionierten Abgabe von fliessfähigen Massen**
Device for portioned delivery of free-flowing materials
Dispositif pour le dosage préportionné de substances coulantes

(30) Priorität: 20.09.1990 AT 1910/90
(43) Veröffentlichungstag der Anmeldung: 25.03.1992
(73) Patentinhaber: BERNDORF BAND GesmbH, A-2560 Berndorf (AT)
(72) Erfinder: Harreither, Rupert, Dipl.-Ing., A-2500 Baden (AT)
(74) Vertreter: Widtmann, Georg, Dipl.-Ing. Dr. techn.

(56) Entgegenhaltungen:
- EP-A- 0 145 839
- EP-A- 0 303 755
- EP-A- 0 339 325
- CH-C- 105 767
- DE-A- 1 963 754
- GB-A- 763 704

## Beschreibung

Die Erfindung bezieht sich auf eine Vorrichtung zur portionierten Abgabe von fließfähigen, insbesondere flüssigen bzw. pastosen, Massen mit einer um eine horizontale Achse drehbaren Trommel, weiche in ihrem zylindrischen Mantel eine Vielzahl von, insbesondere kreisförmigen, Öffnungen aufweist.

Das Portionieren von pastösen bis flüssigen Massen stellt zwar meist eine der letzten Fabrikationsschritte von Chemikalien, Lebensmitteln oder auch Medikamenten dar, wobei je nach Erfordernis, eine bestimmte Form der abgegebenen Portionen bzw. eine bestimmte Menge oder auch beide Erfordernisse vorgegeben sind. Die von einer derartigen Vorrichtung abgegebenen Mengen werden in der Regel auf Transporteinrichtungen, insbesondere endlose Bänder, abgegeben, auf welchen endweder durch Erhitzen oder Abkühlen der Massen ein Erstarren derselben erfolgt.

Bei der Abgabe der Massen aus einer drehbaren Trommel ist es sowohl aus Gründen der Volumskonstanz als auch der Formkonstanz erwünscht, jegliches Vor- oder Nachfließen zu vermeiden, und es soll die Abgabe reproduzierbar, ohne Berücksichtigung, welche Bereiche der Trommel die Abgabe durchführen, ermöglicht sein.

Aus der DE-B 19 41 460 wird eine Vorrichtung zur tropfenförmigen Abgabe von preßbaren Massen aus einer Wanne bekannt, wobei die Portionierung über eine bewegliche Blende erfolgt. Negen der reziprozierenden Bewegung der Blende und dadurch bedingten konstruktiven Aufwand kommt es zum Aufbauen der abzuscheidenden Substanz zwischen Wanne und Blende, so daß nach relativ kurzen Zeiten aufwendige Reinigungsarbeiten erforderlich sind, um eine exakte Portionierung zu ermöglichen.

Bei einer anderen Vorrichtung, die in der DE-38 19 558 A1 beschrieben ist, sind an einer beheizten Wanne in ihrem unteren Bereich Düsen vorgesehen, aus welchen die Masse austritt und über einen profilierten Flügel in Einzeltropfen zerteilt wird. Diese Tropfen fallen sodann auf ein darunter angeordnetes Kühlband. Bei dieser Vorrichtung ist sowohl die Form als auch die Menge der abgelegten Portionen auf dem Kühlband nicht reproduzierbar.

Aus der EP-A 244 849, von welchem Stande der Technik die vorliegende Erfindung ausgeht, wird eine Granuliervorrichtung mit einer gelochten Hohlwalze bekannt. Diese gelochte Hohlwalze weist an ihrer inneren Oberfläche eine Verzahnung auf. In diese Verzahnung greift die weitere Verzahnung einer im Inneren der Hohlwalze angeordneten Walze ein. Die zu granulierende Masse wird nun in die Hohlwalze eingebracht und gelangt durch die Drehbewegung der Trommel in die Zahnradzwischenräume und wird von dort über die von der Hohlwalze mitgenommene Rolle ausgepreßt. Liegt eine Evolventenverzahnung vor, so soll durch Verstellung des Abstandes der Walzenachsen zueinander das Volumen der zwischen den Zahnleisten eingeschlossenen Räume beeinflußt werden können. Unterhalb der Granuliervorrichtung ist ein endloses Band angeordnet, das die austropfende Masse aufnimmt. Zusätzlich ist vorgesehen, eine Änderung des Volumens der ausgepreßten Tröpfchen durch Auswechseln der Rolle sowie der Zahnleisten im Inneren der Hohlwalze zu erreichen.

Nachteilig bei einer derartigen Konstruktion ist, daß lediglich in einem sehr kleinen Bereich eine Volumsänderung erreicht werden kann, die durch den in sich geschlossenen Raum der Verzahnung der gelochten Walze und der Rolle gegeben ist. Durch diesen Nachteil ist die Menge der austropfenden Masse stark von der Viskosität derselben abhängig, da ein Rückfließen der Masse durch die Spalten der Verzahnung, wenn der Raum noch nicht abgeschlossen ist, stattfindet. Gleichzeitig ist ein Vor- und Nachtropfen fast unvermeidlich, da insbesondere ein Rücksaugen der Masse in den Hohlzylinder nur in geringem Maße stattfinden kann, u. zw. in jenem Bereich, in dem die Räume zwischen den Verzahnungen geschlossen sind, und das Volumen auf Grund der Drehbewegung zunimmt. Weiters ist durch den Zwangsantrieb entweder des äußeren Zylinders oder der inneren Rolle durch den jeweils anderen Zylinder ein Abrieb bei der Verzahnung bedingt, der einerseits zu einem Verschleiß und damit Volumsveränderung über die Zeit führt, und anderseits kommt das abgeriebene Produkt in die auszupressende Masse, wodurch eine unerwünschte Verunreinigung des erhaltenen Produktes verursacht wird. Diese Ausführungen sind selbstverständlich auch gültig, wenn die Verzahnung, wie in dieser Literaturstelle vorgeschlagen, mit Kunststoff aufgebaut ist.

Die Erfindung hat sich zum Ziel gesetzt, eine Vorrichtung zum portionierten Abgeben von flüssigen bis pastösen Massen zu schaffen, die eine besonders gleichmäßige Mengenabgabe ermöglicht, wobei gleichzeitig ein Vor- und insbesondere Nachlaufen besonders einfach vermieden werden kann.

Eine weitere Aufgabe der vorliegenden Erfindung besteht darin, daß die Vorrichtung durch einfaches Verstellen ein Anpassen an die erwünschte zu portionierende Menge und gegebenenfalls an andere Viskositäten erlaubt. Weiters soll der Verschleiß innerhalb der in den pastösen Massen beheimateten Vorrichtung besonders gering gehalten werden können.

Die erfindungsgemäße Vorrichtung zur portionierten Abgabe von fließfähigen Massen mit einer um eine im wesentlichen horizontale Achse drehbaren Trommel, welche in ihrem zylindrischen Mantel eine Vielzahl von, insbesondere kreisförmigen, Öffnungen aufweist und einer in dieser drehbar angeordneten Rolle, wobei die Achse der Rolle und die der Trommel parallel und exzentrisch zueinander angeordnet sind, und gegebenenfalls die Achsen relativ zueinander bewegbar sind, und unterhalb der Trommel eine die Masseportionen, insbesondere Massetropfen, aufnehmende Transporteinrichtung, z. B. ein endloses Band, angeordnet ist, auf welches gegebenenfalls die Masseportionen erstarren, besteht im wesentlichen darin, daß die Rolle als Zellenrad, dessen Lamellen mit der inneren, gegebenenfalls zylindrischen, Oberfläche des zylindrischen Mantels kooperieren, ausgebildet ist, wobei die Trommel unter Freilassung eines unteren Bereiches teilweise von einem Behälter für die Masse umschlossen ist. Durch die horizontale Anordnung der drehbaren Trommel mit ihren Öffnungen und der in dieser angeordneten Rolle wird eine gleichmäßige Verteilung der zu portionierenden Masse innerhalb der Vorrichtung besonders einfach erreicht. Über die exzentrische Anordnung von Trommel zur Rolle kann eine besonders einfache Volumsreduktion während der Drehbewegung zwischen Trommel und Rolle realisiert werden. Zur Aufnahme der portionierten Massetropfen kann ein endloses Band unterhalb der Trommel vorgesehen sein, die auch längere anschließende kontinuierlich durchgeführte Verfahren, wie beispielsweise Trocknen, Backen od. dgl., ermöglicht. Mit der Ausbildung der Rolle als Zellenrad, dessen Lamellen mit der inneren zylindrischen Oberfläche des zylindrischen Mantels kooperieren, können genau definierte Volumina gebildet werden, welche die Menge der portionierten Masse definieren.

Durch die exzentrische Lagerung vom Zellenrad zum perforierten Mantel können sowohl im Bereich der innerhalb des Behälters liegt, als auch im Bereich der außerhalb des Behälters liegt, Bereiche einer Volumszunahme und anschließend Bereiche einer Volumsabnahme der von den Lamellen des Zellenrades und der Trommel eingeschlossenen Raumes gebildet sein. Bei der Volumszunahme innerhalb des mit der Masse gefüllten Behälters wird die zu portionierende Masse in den Raum zwischen Trommel und Zellenrad eingesaugt. Danach wird das Volumen wieder verringert und die zu portionierende Masse ausgestoßen. Damit ist sichergestellt, daß eine vollkommene Erfüllung des Raumes und damit eine genaue Portionierung gegeben ist. Mit Austritt der Bereiche der Trommel gemeinsam mit dem Zellenrad außerhalb des Behälters wird zwar die pastöse Masse weiterhin ausgepreßt, jedoch wird dadurch bereits die Portion der auszupressenden Masse, die auch davon abhängig ist, wieviel Bohrungen oder Perforationen die Trommel entlang einer Erzeugenden aufweist, bestimmt. Nach Beendigung des Portioniervorganges tritt eine Vergrößerung des Volumens zwischen Zellenrad und Trommel ein, wodurch ein Nachtropfen der Masse besonders wirksam vermieden wird, da die Masse in den Raum zurückgesaugt wird. Nach Eintreten des Bereiches in den Behälter wird sodann wieder zu portionierende Masse eingesaugt. Durch die relativ zueinander zu bewegenden Achsen des Zellenrades und der Trommel kann das Volumen, welches zwischen Trommel und Zellenrad, u. zw. den Lamellen, eingeschlossen wird, beim Austritt aus dem Behälter und damit die Menge der ausgepreßten Masse, exakt festgelegt werden.

Sind die Trommel und das Zellenrad mit gleicher Umdrehungszahl antreibbar, so kann erreicht werden, daß die Lamellen des Zellenrades in keiner Stellung die Öffnungen der Trommel überschreiten, sondern sich lediglich im Bereich zwischen zwei Reihen von Bohrungen bewegen, wodurch eine besonders exakte Portionierung gewährleistet ist.

Sind die Lamellen in radialen, insbesondere in Richtung von Erzeugenden, verlaufenden Nuten geführt und elastisch, z. B. über Federn, gegen die Trommel gehalten, so kann einerseits eine besonders gute Beweglichkeit der Lamellen im Zellenrad und eine Abdichtung gegen die Trommel erreicht werden und anderseits ein besonders geringer Verschleiß ermöglicht sein. Der federnde Druck der Lamellen gegen die Behälterinnenwand kann auch pneumatisch oder hydraulisch durchgeführt werden, wobei bei einem hydraulischen System als Druckflüssigkeit auch die zu portionierende Masse selbst verwendet werden kann, so daß selbst bei Undichtigkeiten keine Kontaminierung der zu portionierenden Masse mit Hydraulikflüssigkeit gegeben ist.

Ist in der Vertikalen der Abstand der Achse der Trommel zum Behälter änderbar, so kann dadurch der Austritt eines bestimmten Bereiches der Trommel aus dem Behälter und damit das Volumen der Massenportionen besonders einfach festgelegt werden. Diese Maßnahme kann entweder für sich alleine zur Änderung des auszupressenden Volumens eingesetzt werden oder es kann in der Vertikalen der Abstand der Achse des Zellenrades zum Behälter veränderbar sein. Es besteht allerdings auch die Möglichkeit, beide konstruktive Maßnahmen für sich alleine anzuwenden.

Eine konstruktiv besonders einfache und betriebssichere Lösung, die gleichzeitig eine stufenlose Einstellung des zu portionierenden Volumens erlaubt, besteht darin, daß die Trommel und/oder das Zellenrad in Exzentern gelagert sind.

Ist der Exzenter des Zellenrades im Exzenter der Trommel gelagert, so ist eine konstruktive einfache Lösung gegeben, die sowohl betriebssicher als auch genau in der Portionierung ist.

Sind die Exzenter außerhalb der Trommel angeordnet, so sind die Exzenter besonders einfach gegen Verschmutzung gesichert, wobei weiters das Leervolumen innerhalb der Trommel besonders groß gehalten werden kann.

Ist der Behälter gegenüber der Trommel über zumindest eine, insbesondere zwei, beidseits am Behälter festgelegten Dichtleisten abgedichtet, so ist in Längsrichtung der Trommel eine konstruktive, einfache und sichere Lösung für den gleichzeitigen Eintritt und Austritt von Bohrungen gegeben.

Sind bei exzentrischer Anordnung der Achsen von Trommel und Zellenrad zueinander die Bereiche der Zunahme und/oder Abnahme des von zwei Lamellen des Zellenrades und der Trommel umschlossenen Volumens, die im Behälter vorgesehen sind, änderbar, so kann je nach Erfordernis, z. B. der Viskosität, der aus dem Behälter in die Trommel einsaugbaren Massen, die Zeitspanne zum Einsaugen eingestellt werden, wobei weiters auch die Menge der zu portionierenden Masse, die aus der Trommel austritt, prädestiniert werden kann.

Eine Veränderung dieser Bereiche kann konstruktiv besonders einfach durch Schwenken des Behälters um eine Achse parallel zur Achse der Trommel gelöst werden oder es kann der Behälter in der Vertikalen verschiebbar angeordnet sein.

Eine andere konstruktive Lösung, bei welcher nur geringes Raumerfordernis vorliegt und bei welchem lediglich geringe Massen bewegt werden müssen, um die beiden Bereiche zu ändern, besteht darin, daß zumindest eine, insbesondere beide, Dichtung(en) des Behälters entlang der Umfangsrichtung der Trommel verschieb- und/oder verschwenkbar sind.

Ist am Einlauf des Behälters, in Drehrichtung der Trommel gesehen, eine Dichtung angeordnet, die an der Trommel federnd, insbesondere tangierend, über eine Fläche anliegt, so ist eine Dichtung gegeben, die der Beweglichkeit der Trommel in der Vertikalen besonders einfach Rechnung trägt.

Weist eine Welle, die die Achse des Zellenrades bildet, in Achsrichtung verlaufende Bohrungen für ein temperierendes, insbesondere heizendes, Medium auf, so kann die Viskosität der zu portionierenden Masse reproduzierbar eingestellt werden, so daß mit dieser konstruktiv einfachen Lösung ein Nachlaufen der Masse vermieden werden kann.

Weist der Behälter Bohrungen oder Außenrohrleitungen für ein temperierendes, insbesondere heizendes, Medium auf, so kann ein Vortropfen oder Auslaufen der Masse aus dem Behälter konstruktiv einfach vermieden werden.

Sind die Bohrungen zumindest teilweise an ihren Enden flüssigkeitsleitend miteinander verbunden, so kann ein Temperaturgradient in achsialer Richtung vermieden werden.

Weisen der Behälter und das Zellenrad dieselbe Anzahl von Bohrungen, insbesondere mit demselben Querschnitt, auf, sind idente Heizleistungen im Behälter und im Zellenrad einfach ermöglicht.

Eine gleiche Umdrehungszahl für Zellenrad und Behälter ist insbesondere dann gewährleistet, wenn sowohl Zellenrad als auch Behälter von demselben Antrieb angetrieben sind.

Ist der Antrieb des Zellenrades mit dem der Trommel über eine Gleithülse, mit welcher die Achse des Zellenrades und der Trommel entlang von Gleitflächen, die normal zueinander stehen, verschiebbar sind, gekoppelt, so kann bei vollkommen identem Antrieb eine exzentrische Verlagerung der Achsen von Zellenrad zur Trommel ohne Störung des Antriebes durchgeführt werden.

Ist der Behälter an den stirnseitigen Enden gegenüber der Trommel über Labyrinthdichtungen abgedichtet, so ist eine reibungsfreie und damit störungsfreie Dichtung gegeben.

Weist der Behälter einen Verteilerraum für die Masse auf, so kann selbst mit nur einer Anspeisung eine gleichmäßige Verteilung der Masse im Behälter und damit eine gleichmäßige Zufuhr derselben in die Trommel und damit weiters eine exakte portionsweise Abgabe der Masse sichergestellt sein.

Ist der Verteilerraum in einem mit dem Behälter lösbar verbundenen Teil vorgesehen, so können je nach Viskosität der zu portionierenden Masse unterschiedliche Verteilerräume am Behälter vorgesehen sein.

Im folgenden wird die Erfindung anhand der Zeichnungen näher erläutert:

Es zeigen:
Fig. 1 und 2 eine Vorrichtung zum Portionieren in schematischer Ansicht, teilweise im Schnitt in der Sicht von vorne bzw. von oben,
Fig. 3 den Schnitt gemäß Linie 3/3 gemäß Fig. 1
und Fig. 4 den Schnitt gemäß Linie 4/4 gemäß Fig. 2 und
Fig. 5 eine Darstellung teilweise in Durchsicht des Behälters für die auszupressenden Massen.

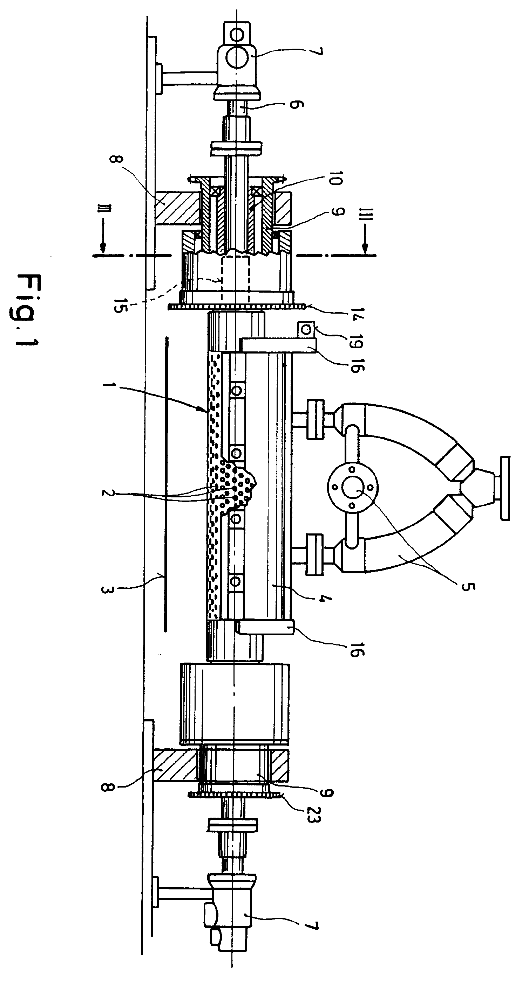

Die in der Fig. 1 dargestellten Trommel 1 weist in ihrem zylindrischen Mantel eine Vielzahl von kreisförmigen Öffnungen 2 auf, die jeweils entlang einer Erzeugenden der Trommel angeordnet sind und sich über den gesamten zylinderförmigen Mantel erstreckt. Unterhalb der Trommel ist ein endloses Band 3 angeordnet, das die aus der Trommel 1 austretenden Masseportionen auf dem Band aufnimmt und weitertransportiert. Die Trommel 1 ist von einem Behälter 4 teilweise umschlossen, welcher über Leitungen 5 aus einem nicht dargestellten Massebehälter angespeist wird. Die horizontale Welle 6 ist in den Drehführungen 7 gelagert. In den Lagerböcken 8 sind die Exzenterhülsen 9 der Trommel 1 und die Exzenterhülsen 10 des Zellenrades gelagert.

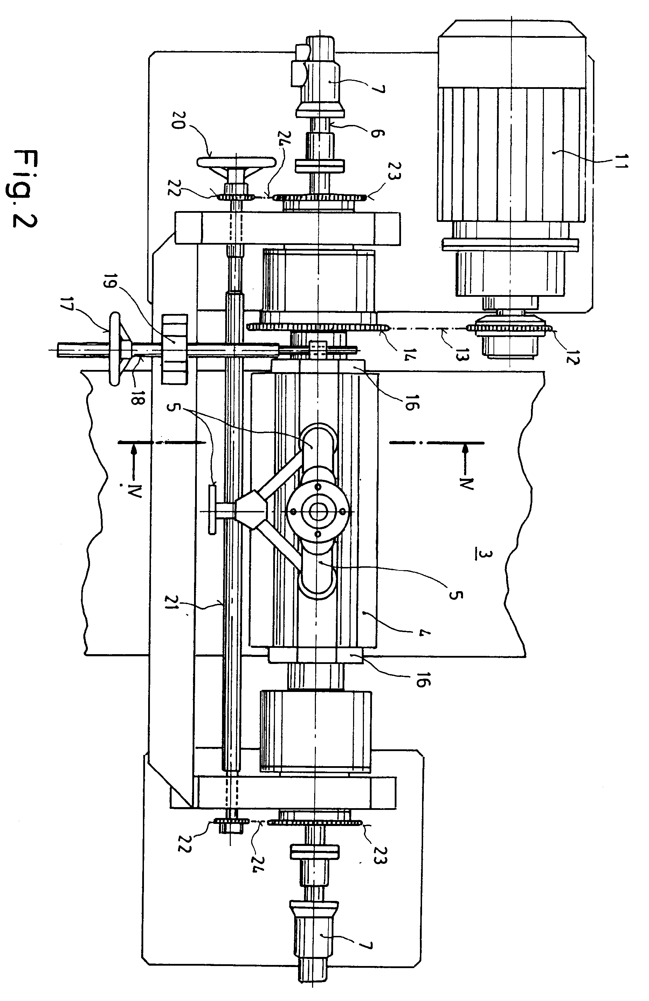

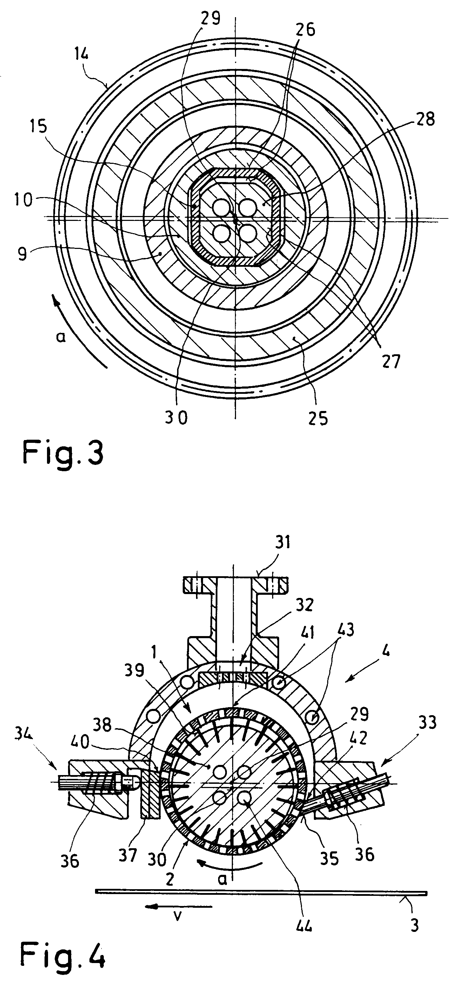

Der Antrieb erfolgt, wie besonders deutlich aus Fig. 2 ersichtlich, über eine Antriebseinheit, u. zw. einen Elektromotor 11 mit Getriebe, welcher über ein Kettenrad 12, Kette 13 und Kettenrad 14, die Gleithülse 15 antreibt. Über diese Gleithülse werden, wie im Zusammenhang mit Fig. 3 erläutert, sowohl die Trommel 1 als auch das Zellenrad angetrieben. Der im Querschnitt teilzylinderförmige Behälter 4 ist an seinen beiden stirnseitigen Enden über Abdeckplatten 16 und Labyrinthdichtungen abgeschlossen. Die Abdichtung der Trommel 1 und des Zellenrades gegenüber dieser Abdeckplatten erfolgt über nicht dargestellte Labyrinthdichtungen. Über Handrad 17, Spindel 18 und Spindelmutter 19 (in Fig. 1 ist lediglich die Spindelmutter 19 dargestellt) kann der Behälter 4 um eine nicht dargestellte horizontale Achse, die parallel zur Achse des Behälters 4 läuft, geschwenkt werden, wodurch die Trommel 1, wie besonders deutlich in Fig. 4 ersichtlich, mehr oder weniger in den Behälter eintaucht. Durch das Handrad 20 mit Spindel 21 werden über die Kettenräder 22 und Kette 24 die Kettenräder 23 betätigt, die eine Verstellung der Exzenterhülse 9 der Trommel 1 beidseitig der Trommel bewirken, so daß die Trommel innerhalb des Behälters vertikal auf- und abwärts bewegt werden kann. Ein analoger Betätigungsmechanismus, allerdings aus Gründen der Übersicht nicht dargestellt, ist für die Exzenterhülsen des Zellenrades vorgesehen, wobei die Exzenterhülse 10 des Zellenrades in den Exzenterhülsen 9 der Trommel gelagert sind, so daß eine doppelte Verstellmöglichkeit gegeben ist.

Bei dem in Fig. 3 dargestellten schematischen Schnitt wird die Kraftübertragung vom Kettenrad 14, das über die Kette 13 und der Antriebseinheit 11 angetrieben wird und seinerseits mit der Antriebshülse 25 verbunden ist, besonders deutlich ersichtlich. Innerhalb dieser sind die Exzenterhülse 9 der Trommel sowie 10 des Zellenrades angeordnet. Die Exzenterhülse 10 des Zellenrades weist einen polygonen Innenquerschnitt mit Gleitflächen 26 und 27, die zueinander normal stehen, auf. Diese Gleithülse kann innerhalb der Exzenterhülse 10 des Zellenrades entlang der Gleitflächen 26 gleiten, wohingegen in die normal dazu befindliche Richtung Spalten für die freie Beweglichkeit vorgesehen sind. Die Welle 28 des Zellenrades kann in der Gleithülse 15 in vertikaler Richtung gleiten und ist innerhalb der Gleithülse angeordnet. Die Achsen 29 der Trommel 1 und 30 des Zellenrades können in vertikaler Richtung relativ zueinander bewegt werden. Durch Antrieb des Kettenrades 14 in Richtung a erfolgt die Kraftübertragung über die Gleitflächen 26, 27, die Antriebshülse 25 auf die Trommel bzw. auf das Zellenrad, so kann trotz exzentrischer Anordnung dieser beiden zylindrischen Bauteile ein zwangsweise gleichförmiger Antrieb mit gleicher Umdrehgeschwindigkeit erfolgen.

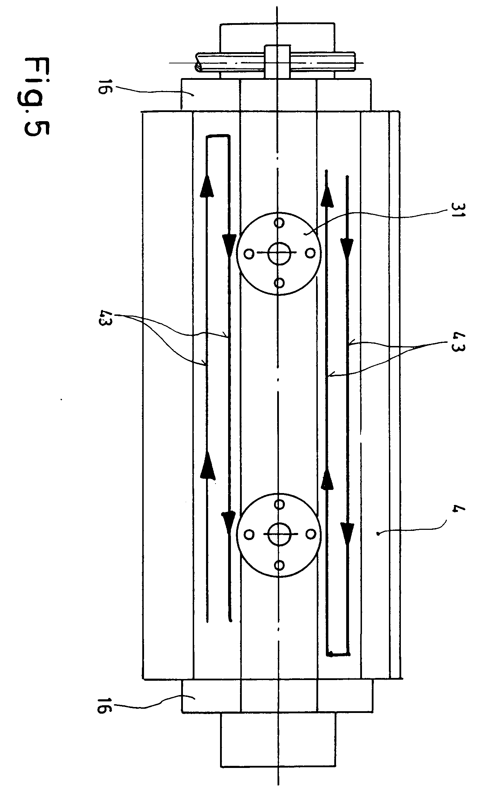

Die Funktionsweise der Vorrichtung zum Portionieren von Massen ist besonders deutlich der schematischen Schnittdarstellung gemäß Fig. 4 entnehmbar. Der Behälter 4 weist einen Einlaufteil 31 auf, welcher einen Verteilerraum 32 aufweist, welcher zur gleichmäßigen Zufuhr der zu portionierenden Masse in den Behälter 4 dient. Die um die Achse 29 drehbare Trommel 1 ist über Dichtungen 33 und 34, welche vom Behälter 4 getragen sind, abgedichtet. Die Dichtung 33 weist eine Dichtleiste 35 auf, die über Federn 36 gegen die Trommel 1 federnd gehalten ist. Auf der Einlaufseite der Trommel in den Behälter ist eine Dichtleiste 37 vorgesehen, die tangential an der Trommel 1 anliegt. Diese Dichtleiste 37 ist ebenfalls von Federn 36 gegen den Behälter 1 gehalten. Als Material für die Dichtleisten kommen insbesondere Kunststoffe mit einem niedrigen Reibungsbeiwert, wie beispielsweise Polytetrafluorethylen, Polypropylen, Polyethylen u. dgl. in Frage. Innerhalb der Trommel ist um die Achse 30 ein Zellenrad 38 angeordnet. Im Zellenrad sind in radialen Nuten Lamellen 39 vorgesehen, die durch federnde Mittel gegen die zylindrische Innenwandung der Trommel 1 gedrückt sind. Wie bereits ausführlich dargelegt, liegt die Achse 29 der Trommel 1 und die Achse 30 des Zellenrades 38 in einer Vertikalebene übereinander. Werden sowohl Trommel als auch Zellenrad in Drehrichtung a gedreht, so wird im Bereich zwischen der Dichtlinie 40 und dem Scheitel 41 des Behälters 4, die in diesem angeordnete Masse angesaugt, wohingegen im Bereich zwischen dem Scheitel 41 und der Dichtlinie 42 die vom Zellenrad durch die Öffnungen 4 angesaugte Masse über die Öffnungen wieder in den Behälter abgegeben wird. Verläßt die Einheit Zellenrad 38 und Trommel 1 die Dichtlinie 42, so wird nun die Masse aus dem Raum zwischen zwei Lamellen und der Trommel durch die Öffnungen 4 ausgepreßt. Dieser Auspreßvorgang erfolgt bis zum tiefsten Punkt der Trommel. Bei der weiteren Drehbewegung erfolgt wieder ein Ansaugen, so daß ein Nachtropfen der pastösen Masse aus der Trommel nicht erfolgen kann. Die Tropfengröße der ausgepreßten Masse aus der Trommel 1 kann, wie dieser Zeichnung unschwer zu entnehmen, durch Verschieben der beiden Achsen 29 und 30 zueinander beeinflußt werden. Eine weitere Möglichkeit besteht darin, die Dichtlinie entlang der sich drehenden Trommel 1 nach oben zu verschieben, so daß die ausgepreßte Masse nicht mehr in den Behälter rückgepreßt wird, sondern bereits zur Tropfenbildung führt. Ein derartiges Verschieben des Behälters kann entweder durch eine Schwenkbewegung, wie sie zu Fig. 1 bereits näher erläutert wurde, oder auch durch eine Parallelverschiebung in vertikaler Richtung erreicht werden. Die Geschwindigkeit v des Bandes 3 ist mit der Drehgeschwindigkeit a der Trommel abgestimmt, so daß die Horizontalgeschwindigkeit der herabtropfenden Masse jener des Bandes entspricht, wodurch eine besonders genaue Ablage der Tropfen in geometrisch erwünschter Gestalt möglich wird. Sowohl das Zellenrad 38 als auch der Behälter 4 können über in Achsrichtung verlaufende Bohrungen 43 bzw. 44 verfügen. Diese Bohrungen dienen für die Zufuhr von einem Temperiermedium, insbesondere von einem Heizmedium, wobei die Bohrungen, wie in Fig. 5 dargestellt, paarweise an einem Ende miteinander verbunden sind, so daß das Medium durch eine Bohrung eingebracht und aus der nebenan liegenden Bohrung wieder aus dem Mantel des Behälters abgeführt werden kann. Eine entsprechende Anordnung kann ebenfalls bei den Bohrungen 44 des Zellenrades 38 vorgesehen werden.

## Patentansprüche

1. Vorrichtung zur portionierten Abgabe von fließfähigen Massen mit einer um eine im wesentlichen horizontale Achse (29) drehbaren Trommel (1), welche in ihrem zylindrischen Mantel eine Vielzahl von, insbesondere kreisförmigen, Öffnungen (2) aufweist, und einer in dieser drehbar angeordneten Rolle (38), wobei die Achse (30) der Rolle und die (29) der Trommel (1) parallel und exzentrisch zueinander angeordnet sind und gegebenenfalls die Achsen (29, 30) relativ zueinander bewegbar sind und unterhalb der Trommel (1) eine die Masseportionen, insbesondere Massetropfen, aufnehmende Transporteinrichtung, z. B. ein endloses Band (3), angeordnet ist, auf welcher gegebenfalls die Masseportionen erstarren, dadurch gekennzeichnet, daß die Rolle als Zellenrad (38), dessen Lamellen (39) mit der inneren, insbesondere zylindrischen, Oberfläche des zylindrischen Mantels der Trommel (1) kooperieren, ausgebildet ist, wobei die Trommel (1) unter Freilassung eines unteren Bereiches teilweise von einem Behälter (4) für die Masse umschlossen ist.

2. Vorrichtung nach Anspruch 1, dadurch gekennzeichnet, daß die Trommel (1) und das Zellenrad (39) mit gleicher Umdrehungszahl antreibbar sind.

3. Vorrichtung nach Anspruch 1 oder 2, dadurch gekennzeichnet, daß die Lamellen (39) in radialen, insbesondere in Richtung von Erzeugenden, verlaufenden Nuten geführt und elastisch, z. B. über Federn, gegen die Trommel (1) gehalten sind.

4. Vorrichtung nach Anspruch 1, 2 oder 3, dadurch gekennzeichnet, daß in der Vertikalen der Abstand der Achse (29) der Trommel (1) zum Behälter (4) änderbar ist.

5. Vorrichtung nach einem der Ansprüche 1 bis 4, dadurch gekennzeichnet, daß in der Vertikalen der Abstand der Achse (30) des Zellenrades (38) zum Behälter (4) änderbar ist.

6. Vorrichtung nach einem der Ansprüche 1 bis 5, dadurch gekennzeichnet, daß die Trommel (1) und/oder das Zellenrad (38) in Exzenterhülsen (9, 10) gelagert sind.

7. Vorrichtung nach Anspruch 6, dadurch gekennzeichnet, daß die Exzenterhülsen (10) des Zellenrades (38) in den Exzenterhülsen (9) der trommel (1) gelagert sind.

8. Vorrichtung nach Anspruch 6 oder 7, dadurch gekennzeichnet, daß die Exzenterhülsen (9, 10) außerhalb der Trommel (1) und gegebenenfalls außerhalb des Behälters (4) angeordnet sind.

9. Vorrichtung nach einem der Ansprüche 1 bis 8, dadurch gekennzeichnet, daß der Behälter (4) gegenüber der Trommel (1) über zumindest eine, insbesondere zwei, beidseits am Behälter festgelegte(n) Dichtleiste(n) (35, 37) abgedichtet ist.

10. Vorrichtung nach einem der Ansprüche 1 bis 9, dadurch gekennzeichnet, daß bei exzentrischer Anordnung der Achsen (29, 30) von Trommel (1) und Zellenrad (38) zueinander die Bereiche der Zunahme (40 bis 41) und/oder der Abnahme (41 bis 42) des von zwei Lamellen (39) des Zellenrades (38) und der Trommel (1) umschlossenen Volumens, die im Behälter vorgesehen sind, änderbar sind.

11. Vorrichtung nach Anspruch 10, dadurch gekennzeichnet, daß der Behälter (4) um eine Achse parallel zur Achse (29) der Trommel (1) schwenkbar ist.

12. Vorrichtung nach Anspruch 10 oder 11, dadurch gekennzeichnet, daß der Behälter (4) in der Vertikalen verschiebbar ist.

13. Vorrichtung nach Anspruch 10, 11 oder 12, dadurch gekennzeichnet, daß zumindest eine, insbesondere beide, Dichtung(en) des Behälters (4) in Umtangsrichtung der Trommel (1) verschieb- und/oder verschwenkbar ist (sind).

14. Vorrichtung nach einem der Ansprüche 1 bis 13, dadurch gekennzeichnet, daß am Einlauf des Behälters in Drehrichtung (a) der Trommel (1) gesehen, eine Dichtung (37) angeordnet ist, die über eine an der Trommel federnd, insbesondere tangierende, Fläche anliegt.

15. Vorrichtung nach einem der Ansprüche 1 bis 14, dadurch gekennzeichnet, daß eine Welle (28), welche die Achse des Zellenrades (38) bildet, in Achsrichtung verlaufende Bohrungen (44) für ein temperierendes, insbesondere heizendes, Medium aufweist.

16. Vorrichtung nach einem der Ansprüche 1 bis 15, dadurch gekennzeichnet, daß der Behälter (4) Bohrungen (43) und/oder Außenrohrleitungen für ein temperierendes, insbesondere heizendes, Medium aufweist.

17. Vorrichtung nach Anspruch 15 oder 16, dadurch gekennzeichnet, daß die Bohrung (43, 44) zumindest an einem Ende miteinander flüssigkeitsleitend verbunden sind.

18. Vorrichtung nach Anspruch 15, 16 oder 17, dadurch gekennzeichnet, daß der Behälter (4) und das Zellenrad dieselbe Anzahl von Bohrungen (43, 44), insbesondere mit demselben Querschnitt, aufweisen.

19. Vorrichtung nach einem der Ansprüche 1 bis 18, dadurch gekennzeichnet, daß das Zellenrad (38) und die Trommel (1) vom selben Antrieb (11) mit gleicher Umdrehungszahl antreibbar sind.

20. Vorrichtung nach Anspruch 19, dadurch gekennzeichnet, daß der Antrieb (11) des Zellenrades (38) mit der Trommel (1) über eine Gleithülse (15), mit welcher die Achse (30) des Zellenrades (38) und die der Trommel (1) entlang von Gleitflächen (26, 27), die normal zueinander stehen, verschiebbar sind, gekoppeit ist.

21. Vorrichtung nach einem der Ansprüche 1 bis 20, dadurch gekennzeichnet, daß der Behälter (4) an seinen stirnseitigen Enden gegenüber der Trommel über Labyrinthdichtungen abgedichtet ist.

22. Vorrichtung nach einem der Ansprüche 1 bis 21, dadurch gekennzeichnet, daß der Behälter (4) einen Verteilerraum (32) für die Masse aufweist.

23. Vorrichtung nach einem der Ansprüche 1 bis 22, dadurch gekennzeichnet, daß der Verteilerraum (32) in einem mit dem Behälter lösbar verbundenen Teil (31) vorgesehen ist.

## Claims

1. A device for the portioned delivery of flowable masses comprising a drum (1) which is rotatable about a substantially horizontal axis (29) and which in its cylindrical casing possesses a plurality of, in particular circular, openings (2) and comprising a roller (38) which is rotatably disposed in said drum (1), where the axis (30) of the roller and the axis (29) of the drum (1) extend in parallel and eccentrically in relation to one another and optionally the axes (29, 30) are displaceable in relation to one another and beneath the drum (1) is ananged a transport device, e.g. an endless belt (3), which receives the portions of the mass, in particular the drops of the mass, and on which optionally the portions of the mass solidify, characterised in that the roller has the form of a rotary vane feeder (38), the vanes (39) of which cooperate with the inner, in particular cylindrical, surface of the cylindrical casing of the drum (1), where the drum (1) is partially enclosed by a container (4) for the mass, leaving a lower region exposed.

2. A device as claimed in Claim 1, characterised in that the drum (1) and the rotary vane feeder (39) are driveable at the same rotational speed.

3. A device as claimed in Claim 1 or 2, characterised in that the vanes (39) are guided in radial grooves which extend in particular in the direction of generatrices and are resiliently held against the drum (1), e.g. via springs,.

4. A device as claimed in Claim 1, 2 or 3, characterised in that in the vertical direction the distance between the axis (29) of the drum (1) and the container (4) is adjustable.

5. A device as claimed in one of Claims 1 to 4, characterised in that in the vertical direction the distance between the axis (30) of the rotary vane feeder (38) and the container (4) is adjustable.

6. A device as claimed in one of Claims 1 to 5, characterised in that the drum (1) and/or the rotary vane feeder (38) are mounted in eccentric sleeves (9, 10).

7. A device as claimed in Claim 6, characterised in that the eccentric sleeves (10) of the rotary vane feeder (38) are mounted in eccentric sleeves (9) of the drum (1).

8. A device as claimed in Claim 6 or 7, characterised in that the eccentric sleeves (9, 10) are arranged outside of the drum (1) and optionally outside of the container (4).

9. A device as claimed in one of Claims 1 to 8, characterised in that the container (4) is sealed in relation to the drum (1) via at least one, in particular two sealing strip(s) (35, 37) fixed to the container on both sides.

10. A device as claimed in one of Claims 1 to 9, characterised in that with the axes (29, 30) of the drum (1) and the rotary vane feeder (38) ananged eccentrically in relation to one another, the zones (40 to 41) in which an increase occurs, and/or the zones (41 to 42) in which a decrease occurs in the volume enclosed by two vanes (39) of the rotary vane feeder (38) and the drum (1), which are provided in the container, are adjustable.

11. A device as claimed in Claim 10, characterised in that the container (4) is pivotable about an axis parallel to the axis (29) of the drum (1).

12. A device as claimed in Claim 10 or 11, characterised in that the container (4) is displaceable in the vertical direction.

13. A device as claimed in Claim 10, 11 or 12, characterised in that at least one, in particular two, seal(s) of the container (4) is/are displaceable and/or pivotable in the peripheral direction of the drum (1).

14. A device as claimed in one of Claims 1 to 13, characterised in that at the inlet of the container, consudered in the direction of rotation (a) of the drum (1), there is ananged a seal (37) which bears against a surface which is particularly tangentially resiliently urged against the drum.

15. A device as claimed in one of Claims 1 to 14, characterised in that a shaft (28), which forms the axis of the rotary vane feeder (38), comprises bores (44), extending in the axial direction, for a temperature-controlling, in particular heating, medium.

16. A device as claimed in one of Claims 1 to 15, characterised in that the container (4) comprises bores (43) and/or outer pipelines for a temperature-controlling, in particular heating, medium.

17. A device as claimed in Claim 15 or 16, characterised in that the bores (43, 44) are connected to one another at least at one end so as to conduct liquid.

18. A device as claimed in Claim 15, 16 or 17, characterised in that the container (4) and the rotary vane feeder possess the same number of bores (43, 44), in particular of the same cross-section.

19. A device as claimed in one of Claims 1 to 18, characterised in that the rotary vane feeder (38) and the drum (1) are driveable by the same drive mechanism (11) at the same rotational speed.

20. A device as claimed in Claim 19, characterised in that the drive mechanism (11) of the rotary vane feeder (38) is coupled to the drum (1) via a sliding sleeve (15), with which the axis (30) of the rotary vane feeder (38) and the axis of the drum (1) are displaceable along sliding surfaces (26, 27) which extend perpendicularly to one another.

21. A device as claimed in one of Claims 1 to 20, characterised in that at its transverse ends the container (4) is sealed In relation to the drum via labyrinth seals.

22. A device as claimed in one of Claims 1 to 21, characterised In that the container (4) comprises a distributor chamber (32) for the mass.

23. A device as claimed in one of Claims 1 to 22, characterised in that the distributor chamber (32) is arranged in a part (31) which is detachably connected to the container.

## Revendications

1. Dispositif pour délivrer des portions de masses coulables, avec; un tambour (1) pouvant tourner autour d'un axe sensiblement horizontal (29), lequel tambour présente dans sa paroi cylindrique une pluralité d'ouvertures (2), notamment circulaires; et un organe tournant (38) agencé à rotation dans ce tambour, l'axe (30) dudit organe et celui (29) du tambour (1) étant mutuellement parallèles et excentriques, et ces axes (29, 30) étant éventuellement mobiles l'un par rapport à l'autre; et, en dessous du tambour (1), un dispositif transporteur, par exemple une bande sans fin (3), recevant les portions, notamment des gouttes de masse, les portions de masse se figeant éventuellement sur ce dispositif transporteur, caractérisé par le fait que l'organe tournant est réalisé en tant que roue (38) à palettes, dont les palettes (39) coopèrent avec la surface intérieure, notamment cylindrique de la paroi cylindrique du tambour (1), lequel tambour (1), tout en laissant une partie inférieure dégagée, est entouré partiellement par un récipient (4) pour la masse.

2. Dispositif selon revendication 1, caractérisé par le fait que le tambour (1) et la roue à palettes (39) peuvent être entraînés à la même vitesse de rotation.

3. Dispositif selon revendication 1 ou 2, caractérisé par le fait que les palettes (39) sont guidées dans des rainures s'étendant radialement, notamment en direction de génératrices, et sont appliquées élastiquement contre le tambour (1), par exemple par l'intermédiaire de ressorts.

4. Dispositif selon revendication 1, 2 ou 3, caractérisé par le fait que, sur la verticale, l'intervalle entre l'axe (29) du tambour (1) et le récipient (4) est modifiable.

5. Dispositif selon l'une des revendications 1 à 4, caractérisé par le fait que, sur la verticale, l'intervalle entre l'axe (30) de la roue (38) à palettes et le récipient (4) est modifiable.

6. Dispositif selon l'une des revendications 1 à 5, caractérisé par le fait que le tambour (1) et/ou la roue (38) à palettes sont montés dans des manchons excentriques (9, 10).

7. Dispositif selon revendication 6, caractérisé par le fait que les manchons excentriques de la roue (38) à palettes sont montés dans les manchons excentriques (9) du tambour (1).

8. Dispositif selon l'une des revendications 6 ou 7, caractérisé par le fait que les manchons excentriques (9, 10) sont disposés à l'extérieur du tambour (1) et éventuellement à l'extérieur du récipient (4).

9. Dispositif selon l'une des revendications 1 à 8, caractérisé par le fait que le récipient (4) est étanché par rapport au tambour (1) par l'intermédiaire d'au moins un, de préférence deux, joncs d'étanchéité (35, 37) fixé(s) au récipient, des deux côtés.

10. Dispositif selon l'une des revendications 1 à 9, caractérisé par le fait qu'en cas d'agencement mutellement excentré des axes (29, 30) du tambour (1) et de la roue (38) à palettes, les régions de la croissance (40, à 41) et/ou de la décroissance (41 à 42) du volume enfermé par deux palettes (39) de la roue (38) à palettes et par le tambour (1), sont variables, ces régions étant prévues dans le récipient.

11. Dispositif selon revendication 10, caractérisé par le fait que le récipient (4) peut pivoter autour d'un axe, parallèlement à l'axe (29) du tambour (1).

12. Dispositif selon selon l'une des revendications 10 ou 11, caractérisé par le fait que le récipient (4) est déplaçable en translation sur la verticale.

13. Dispositif selon l'une des revendications 10, 11 ou 12, caractérisé par le fait qu'au moins un, notamment les deux, organes d'étanchéité du récipient (4) peuvent être déplacés par coulissement et/ou par pivotement dans la direction périphérique du tambour (1).

14. Dispositif selon l'une des revendications 1 à 13, caractérisé par le fait qu'un organe d'étanchéité (37) est disposé à l'entrée du récipient en considérant le sens de rotation (a) du tambour (1), cet organe d'étanchéité s'appliquant élastiquement contre le tambour par l'intermédiaire d'une surface, notamment d'une surface tangente.

15. Dispositif selon l'une des revendications 1 à 14, caractérisé par le fait qu'un arbre (28) qui constitue l'axe de la roue (38) à palettes présente des trous (44) s'étendant axialement, pour un fluide de mise en température, notamment un fluide chauffant.

16. Dispositif selon l'une des revendications 1 à 15, caractérisé par le fait que le récipient (4) présente des trous (43) et/ou des conduites tubulaires extérieures pour un fluide de mise en température, notamment pour un fluide chauffant.

17. Dispositif selon revendication 15 ou 16, caractérisé par le fait que les trous (43, 44) sont reliés entre eux au moins en une extrémité, de manière à pouvoir transmettre un liquide.

18. Dispositif selon revendication 15, 16 ou 17, caractérisé par le fait que le récipient (4) et la roue à palettes présentent le même nombre de trous {43, 44), notamment avec la même section droite.

19. Dispositif selon l'une des revendications 1 à 18, caractérisé par le fait que la roue (38) à palettes et le tambour (1) peuvent être entraînés à une même vitesse de rotation par le même dispositif d'entraînement (11).

20. Dispositif selon revendication 19, caractérisé par le fait que le dispositif d'entraînement (11) de la roue (38) à palettes est couplé au tambour (1) par l'intermédiaire d'un manchon de glissement (15) avec lequel l'axe (30) de la roue (38) à palettes et celui du tambour (1) peuvent être déplacés en translation le long de surfaces de glissement (26, 27) mutuellement orthogonales.

21. Dispositif selon l'une des revendications 1 à 20, caractérisé par le fait que l'étanchéité du récipient (4) par rapport au tambour est assurée, en ses extrémités frontales, par des dispositifs d'étanchéité à labyrinthe.

22. Dispositif selon l'une des revendications 1 à 21, caractérisé par le fait que le récipient (4) présente un volume répartiteur (32) pour la masse.

23. Dispositif selon l'une des revendications 1 à 22, caractérisé par le fait que le volume répartiteur (32) est prévu dans une partie (31) liée de manière amovible au récipient.
